# NEUE EUROPÄISCHE PATENTSCHRIFT

(11) **EP 1 808 062 B2**
(45) Veröffentlichungstag und Bekanntmachung des Hinweises auf die Entscheidung über den Einspruch: **25.07.2012**
(45) Hinweis auf die Patenterteilung: 05.08.2009
(21) Anmeldenummer: 06124117.0
(22) Anmeldetag: 15.11.2006
(51) Int. Cl.: A01D 41/127, A01B 79/00

(54) **Messvorrichtung**
Measuring device
Dispositif de mesure

(30) Priorität: 11.01.2006 DE 102006002437
(43) Veröffentlichungstag der Anmeldung: 18.07.2007
(73) Patentinhaber: AGROCOM GmbH & Co. Agrarsystem KG, 33719 Bielefeld (DE)
(72) Erfinder: Autermann, Ludger, 48317, Drensteinfurt (DE)
(74) Vertreter: Roth, Klaus

(56) Entgegenhaltungen:
- EP-A- 1 394 530
- DE-A1- 4 413 739
- DE-A1- 19 950 396
- DE-C1- 10 002 880
- US-A- 5 837 997
- US-A- 6 119 442
- US-A- 6 160 902

## Beschreibung

Die Erfindung betrifft eine Messvorrichtung an einer Erntemaschine zur Erfassung des Pflanzenbewuchses eines Feldabschnitts (siehe z.B. US-A-6 119 442).

Aus der EP 1 394 530 ist eine Messvorrichtung zur Untersuchung des Pflanzenbewuchses eines Feldabschnitts bekannt. Mit einem optischem Sensorsystem wird auf einer Brachfläche zwischen Grünpflanzen und dem Boden unterschieden. Das Sensorsystem detektiert das Unkraut auf der Brachfläche, mit den vom Sensorsystem generierten Signalen wird eine anschließende ortsspezifische Unkrautbekämpfung auf der Brachfläche durchgeführt, so dass nur dort Unkrautbekämpfungsmittel gespritzt wird, wo auch Unkraut vorhanden ist. Nachteilig bei der bekannten Messvorrichtung ist, dass das Sensorsystem nur auf Brachflächen einsetzbar ist und nicht im stehenden Bestand eines Getreidefeldes eingesetzt werden kann, da die Messvorrichtung nicht zwischen Nutzpflanze und Unkraut unterscheidet und deshalb nicht zur Erfassung von Unkraut auf einem mit Kulturpflanzen bepflanztem Feld einsetzbar ist.

Der Erfindung liegt daher die Aufgabe zugrunde, die Nachteile des Standes der Technik zu vermeiden und insbesondere eine verbesserte Messvorrichtung vorzuschlagen mit der eine Erfassung der Unkräuter im Kulturpflanzenbestand möglich ist.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass die Messvorrichtung den chlorophyllhaltigen Pflanzenbestand bei der Erntefahrt der Erntemaschine detektiert, wird das Unkraut während der Ernte ermittelt und das Ergebnis des Unkrautbefalls auf dem Feld liegt damit unmittelbar nach der Ernte vor und kann so zur Planung der Unkrautbekämpfungsmaßnahmen herangezogen werden.

Erfindungsgemäß ist der im wesentlichen chlorophyllfreie Pflanzenbestand von der Erntemaschine zu erntende Kulturpflanzen und der chlorophyllhaltige Pflanzenbestand Unkräuter, so dass die Messvorrichtung lediglich zwischen diesen beiden Pflanzenarten unterscheiden können muss.

Erfindungsgemäß gestaltung weist die Messvorrichtung wenigstens ein optisches Sensorsystem auf, mit dem die chlorophyllgehalte der Pflanzen detektierbar sind, wobei der Chlorophyllgehalt charakterisierend für den Zustand der Pflanzen ist.

Erfindungsgemäß unterscheidet die Messvorrichtung anhand der Chlorophyllgehalte der Pflanzen Unkräuter und zu erntende Kulturpflanzen voneinander, so dass sie erkennt, wenn Unkraut zwischen den zu erntenden Kulturpflanzen wächst.

Eine einfache Ausführung der Erfindung ergibt sich, wenn die Messvorrichtung eine Auswerteeinheit aufweist, die ein Unkrautsignal generiert, sobald die Messvorrichtung Unkräuter detektiert.

Eine vorteilhafte Ausgestaltung der Erfindung ergibt sich dadurch, dass der Erntemaschine eine Standortbestimmungseinheit zugeordnet ist, die abhängig vom Standort der Erntemaschine Positionssignale generiert wobei das Unkrautsignal mit dem zugehörigen Positionssignal georefereriziert einer Speichereinheit kartiert wird, so dass aus den Daten eine Unkrautkarte generiert werden kann, auf der erkennbar ist, an welcher Stelle des abgeemteten Feldes sich Unkrautnester befinden.

Erfindungsgemäß weist die Emtemaschine ein Vorsatzgerät auf, wobei das Sensorsystem den Pflanzenbewuchs vor dem Vorsatzgerät detektiert, so dass das Sensorsystem die ungeschnittenen Pflanzen abtastet.

In einer vorteilhaften Ausgestaltung der Erfindung emtet das Vorsatzgerät den Pflanzenbewuchs in einer Arbeitsbreite vom Feld, wobei die Sensorsystem eine Abtastbreite aufweist, die annähernd der Arbeitsbreite des Vorsatzgerätes entspricht, so dass jeder Bereich des Feldes während der Erntefahrt untersucht wird.

Erfindungsgemäß tastet das Sensorsystem den Pflanzenbestand von schräg oben und in Fahrtrichtung der Erntemaschine voraus ab, so dass es sowohl das reife Getreide als auch die zwischen dem Getreide gleichhoch wie das Getreide wachsenden Unkräuter jedoch nicht die gleichzeitig auf dem Feld als Zwischenfrucht angebauten, im bodennahen Bereich wachsenden Leguminosen erfasst.

Damit es bei der Erntefahft keine Überlappungen der vom Sensorsystem detektierten Feldabschnitte gibt, ist die Erntemaschine mit einem Spurführungssystem ausgestattet ist, das die Erntemaschine entlang einer Erntegutkante und/oder einer geplanten Spur führt.

Vorteilhafterweise arbeitet die optische Sensoreinheit im sichtbaren Wellenlängenbereich mit Wellenlängen zwischen 400-700 nm, organische Inhaltsstoffe in den Pflanzen sind in diesem Bereich besonders gut nachweisbar.

Weitere vorteilhafte Ausgestaltungen sind Gegenstand weiterer Unteransprüche und werden nachfolgend an Hand des in mehreren Figuren dargestellten Ausführungsbeispiels näher erläutert.

Es zeigen,
Fig. 1 eine schematische Seitenansicht eines Mähdreschers mit einer erfindungsgemäßen Messvorrichtung,
Fig. 2 zeigt eine schematische Draufsicht auf einen Mähdrescher gemäß der Fig.1.

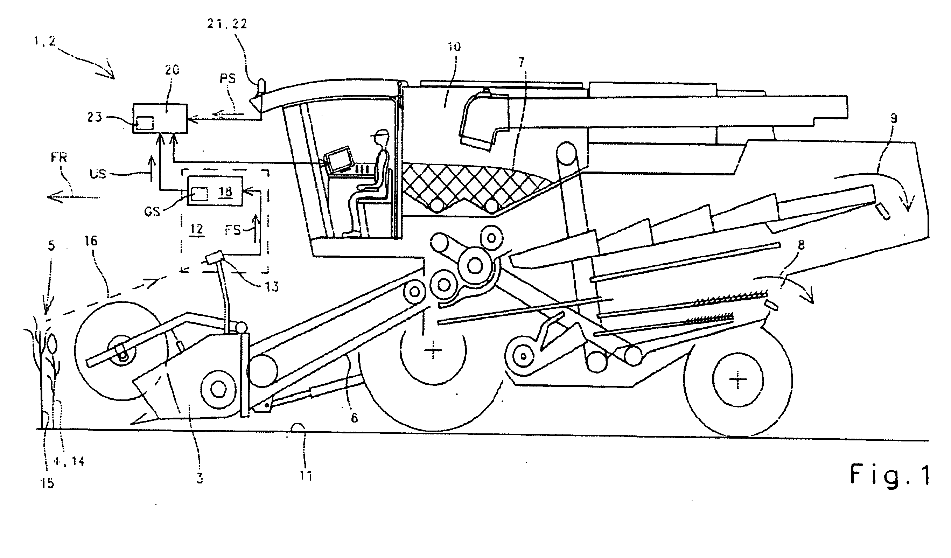

Fig.1 zeigt die Seitenansicht einer als Mähdrescher 1 ausgeführten Erntemaschine 2 während der Erntefahrt. Im vorderen Bereich ist an dem Mähdrescher 1 ein Schneidwerk 3 angeordnet, mit dem der im wesentlichen aus Getreide 4 bestehende Pflanzenbewuchs 5 geschnitten und aufgenommen wird. Das Schneidwerk 3 fuhrt das Getreide 4 einem Schrägförderer 6 zu, der frontseitig am Mähdrescher 1 angeordnet ist. Der Schrägförderer 6 übergibt das Getreide 4 an die an sich bekannten unddaher hier nicht näher erläuterten Arbeitsorgane im Mähdrescher 1, die das Getreide 4 bearbeiten und in Körner 7, Spreu 8 und Stroh 9 trennen. Die Körner 7 werden in einem Korntank 10 auf dem Mähdrescher 1 zwischengespeichert, während die Spreu 7 und das Stroh 8 in den hinteren Bereich des Mähdreschers 1 gefördert und hinter dem Mähdrescher 1 auf dem abgeerntetem Feldboden 11 abgelegt bzw. verteilt werden.

Um den Pflanzenbewuchs 5 auf einem Feldabschnitt 17 zu untersuchen ist an dem Mähdrescher 1 eine erfindungsgemäße, später noch näher zu beschreibende Messvorrichtung 12 vorgesehen, die den chlorophyllhaltigen Pflanzenbewuchs bei der Erntefahrt der Erntemaschine 1, 2 detektiert. Der Pflanzenbewuchs. 5 besteht im wesentlichen aus einem annähernd chlorophyllfreien Pflanzenbestand, der von den von der Erntemaschine 1, 2 zu erntenden Kulturpflanzen 14 gebildet wird und zu einem weiteren Anteil aus einem innerhalb des im wesentlichen chlorophyilfreien Pflanzenbestand wachsenden, aus Unkräutern 15 bestehenden, chlorophyllhaltigen Pflanzenbestand.
Die Messvorrichtung 12 weist ein optisches Sensorsystem 13 auf, dessen Abtaststrahl 16 von schräg oben auf einen Feldabschnitt 17 vor dem Schneidwerk 3 gerichtet ist und den Pflanzenbewuchs 5 auf diesem Feldabschnitt 17 in Fahrtrichtung FR der Erntemaschine 1, 2 voraus erfasst Das optische Sensorsystem 13 detektiert die Chlorophyllgehalte der Pflanzen 15 und generiert abhängig von deren Chlorophyllgehalt Farbsignale FS, die an eine mit dem Sensorsystem 13 verbundene Auswerteeinheit 18 übermittelt werden, wobei der Chlorophyllgehalt der Unkräuter 15 im Vergleich zum Chlorophyllgehalt des abgestorbenen Getreides 4 sehr hoch ist oder bestenfalls das abgestorbene Getreide bei der Ernte kein Chlorophyll mehr enthält. Das optische Sensorsystem 13 arbeitet im sichtbaren Wellenlängenbereich mit Wellenlängen zwischen 400-700 nm. In der Auswerteeinheit 18 werden die Farbsignale FS mit einem in der Auswerteeinheit 18 gespeicherten Grenzfarbsignal GS verglichen, sobald die Farbsignale FS das Grenzfarbsignal GS überschreiten, erkennt die Auswerteeinheit 18, das im untersuchten Feldabschnitt 17 Unkräuter 15 vorhanden sind und generiert ein Unkrautsignal US. Die Auswerteeinheit 18 übermittelt das Unkrautsignal US an einen auf dem Mähdrescher 1 angeordneten Bordcomputer 20. An dem Mähdrescher 1 ist zusätzlich eine Standorterkennungseinrichtung 20 wie beispielsweise ein GPS-Sensor 21 angeordnet, die abhängig von der jeweiligen Position des Mähdreschers 1 Positionssignale PS generiert und die Positionssignale PS an den Bordcomputer 20 übermittelt. Die Unkrautsignale US werden zusammen mit den zugehörigen Positionssignalen PS in einer Speichereinheit 23 des Bordcomputers 20 georeferenziert abgespeichert Mit den abgespeicherten Daten kann beispielsweise eine optimierte Fahrtroute geplant werden, mit der beispielsweise eine Feldspritze die vom Unkraut befallenen Stellen auf dem Feld abfährt oder aber die Spritzmenge vorab berechnet wird, die zur Behandlung der verunkrauteten Stellen benötigt wird,

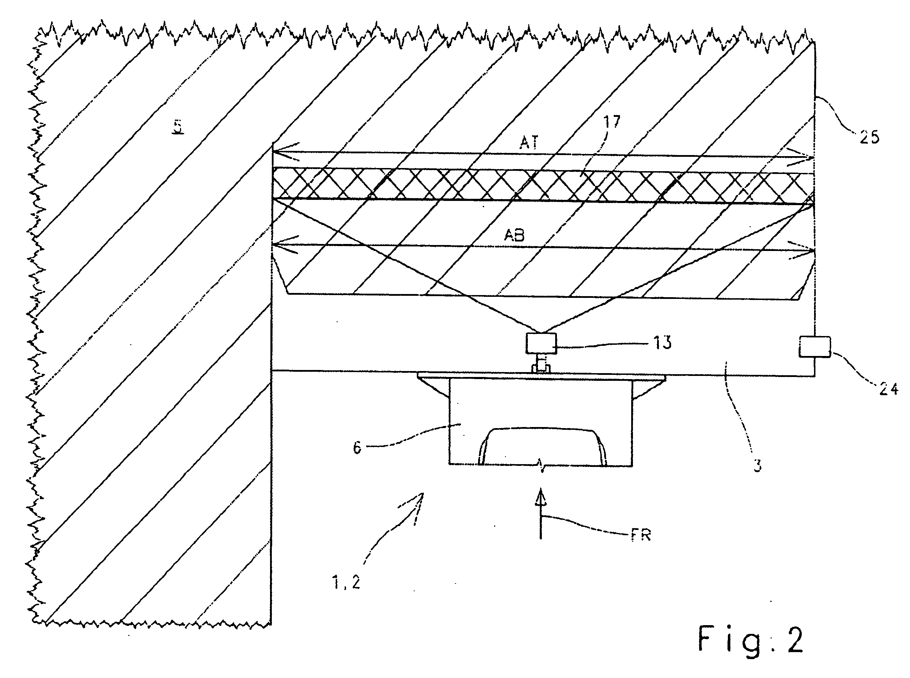

In Fig. 2 ist ausschnittsweise die schematische Draufsicht des Mähdreschers aus Fig.1 dargestellt Das Schneidwerk 3 weist eine Arbeitsbreite AB auf mit der der Pflanzenbewuchs 5 vom Feld geerntet werden kann. Das Sensorsystem 13 weist eine Abtastbreite AT mit der der Feldabschnitt 17 erfasst wird auf, wobei die Abtastbreite AT der Arbeitsbreite AB des Schneidwerks 3 entspricht Damit es bei der Erntefahrt keine Überlappungen, der vom Sensorsystem 13 detektierten Feldabschnitte gibt, welche zu einer doppelten Erfassung der Unkräuter führen würde, ist der Mähdrescher 1 mit einem an sich bekannten und daher nicht näher beschriebenen Spurführungssystem 24 ausgerüstet, das den Mähdrescher 1 beispielsweise entlang einer Erntegutkante 25 oder einer geplanten Spur führt, wobei die geplante Spur auf die Arbeitsbreite AB des Schneidwerks 3 abgestimmt ist.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Erntemaschine
- 3: Schneidwerk
- 4: Getreide
- 5: Pflanzenbewuchs
- 6: Schrägförderer
- 7: Körner
- 8: Spreu
- 9: Stroh
- 10: Korntank
- 11: abgeemteter Feldboden
- 12: Messvorrichtung
- 13: Sensorsystem
- 14: Kulturpflanze
- 15: Unkräuter
- 16: Abtaststrahl
- 17: Feldabschnitt
- 18: Auswerteeinheit
- 20: Bordcomputer
- 21: Standorterkennungseinrichtung
- 22: GPS-Sensor
- 23: Speichereinheit
- 24: Spurführungssystem
- 25: Erntegutkante

- FR: Fahrtrichtung
- FS: Farbsignal
- US: Unkrautsignal
- GS: Grenzfarbsignal
- AB: Arbeitsbreite
- AT: Abtastbreite
- PS: Positionssignal

## Patentansprüche

1. Messvorrichtung (12) an einer landwirtschaftlicher Erntemaschine (1, 2) zur Untersuchung des Pflanzenbewuchses (5) auf einem Feldabschnitt (17), wobei der Pflanzenbewuchs (5) im Wesentlichen aus einem annähernd chlorophyllfreien Pflanzenbestand und zu einem weiteren Anteil aus einem innerhalb des annähernd chlorophyllfreien Pflanzenbestands wachsenden chlorophyllhaltigen Pflanzenbestand besteht, **dadurch gekennzeichnet, dass** die Messvorrichtung (12) den chlorophyllhaltigen Pflanzenbestand bei der Erntefahrt der Erntemaschine (1, 2) detektiert,
und der im Wesentlichen chlorophyllfreie Pflanzenbestand von der Erntemaschine (1, 2) zu erntenden Kulturpflanzen (14) und der chlorophyllhaltige Pflanzenbestand Unkräuter (15) sind, wobei ferner die Messvorrichtung (12) wenigstens ein optisches Sensorsystem (13) aufweist, mit dem die Chlorophyllgehalte der Pflanzen (4, 14, 15) detektierbar sind,
die Messvorrichtung (12) anhand der Chlcrophyllgehalte der Pflanzen (4, 14, 15) Unkräuter (15) und Kulturpflanzen (14) voneinander unterscheiden kann,
und die Erntemaschine (1, 2) ein Vorsatzgerät (3) aufweist, wobei das Sensorsystem (13) den Pflanzenbewuchs (5) vor dem Vorsatzgerät (3) detektiert,
wobei das Sensorsystem (13) den Pflanzenbestand (5) von schräg oben und in Fahrtrichtung (FR) der Erntemaschine (1, 2) voraus abtastet.

2. Messvorrichtung (12) nach Anspruch 1, **dadurch gekennzeichnet, dass** die Messvorrichtung (12) eine Auswerteeinheit (18) aufweist, die ein Unkrautsignal (US) generiert, sobald die Messvorrichtung (12) Unkräuter (15) detektiert.

3. Messvorrichtung (12) nach wenigstens einem der vorhergehenden Ansprüche, **dadurch gekennzeichnet, dass** der Erntemaschine eine Standortbestimmungseinrichtung (21) zugeordnet ist, die abhängig vom Standort der Erntemaschine (1, 2) Positionssignale (PS) generiert, wobei das Unkrautsignal (US) zusammen mit dem zugehörigen Positionssignal (PS) georeferenziert in einer Speichereinheit (23) kartiert wird.

4. Messvorrichtung (12) nach einem der vorgenannten Ansprüche, **dadurch gekennzeichnet, dass** das Vorsatzgerät (3) den Pflanzenbewuchs (5) in einer Arbeitsbreite (AB) vom Feld ernte, wobei das Sensorsystem (13) eine Abtastbreite (AT) aufweist, die annähernd der Arbeitsbreite (AB) des Vorsatzgerätes (3) entspricht.

5. Messvorrichtung (12) nach wenigstens einem der Ansprüche 1 bis 4, **dadurch gekennzeichnet, dass** das optische Sensorsystem (13) im sichtbaren Wellenlängenbereich mit Wellenlängen zwischen 400-700 nm arbeitet.

6. Messvorrichtung (12) nach wenigstens einem der vorhergehenden Ansprüche, **dadurch gekennzeichnet, dass** die Erntemaschine mit einem Spurführungssystem (24) ausgestattet ist, das die Erntemaschine (1, 2) entlang einer Erntegutkante (25) und/oder einer geplanten Spur führt.

## Claims

1. A measuring device (12) on an agricultural harvesting machine (1, 2) for investigating the plant growth (5) on a field portion (17), wherein the plant growth (5) substantially comprises an approximately chlorophyll-free plant stand and in respect of a further portion comprises a chlorophyll-containing plant stand growing within the approximately chlorophyll-free plant stand,
**characterised in that**
the measuring device (12) detects the chlorophyll-containing plant stand in the harvesting travel of the harvesting machine (1, 2) and
the substantially chlorophyll-free plant stand is cultivated plants (14) to be harvested by the harvesting machine (1, 2) and the chlorophyll-containing plant stand is weeds (15),
wherein further the measuring device (12) has at least one optical sensor system (13) with which the chlorophyll contents of the plants (4, 14, 15) are detectable,
the measuring device (12) can distinguish weeds (15) and cultivated plants (14) from each other on the basis of the chlorophyll contents of the plants (4, 14, 15) and
the harvesting machine (1, 2) has a front-mounted implement (3), the sensor system (13) detecting the plant growth (5) in front of the front-mounted implement (13),
wherein the sensor system (13) senses the plant stand (5) inclinedly from above and in leading relationship in the direction of travel (FR) of the harvesting machine (1, 2).

2. A measuring device (12) according to claim 1, **characterised in that** the measuring device (12) has an evaluation unit (18) which generates a weed signal (US) as soon as the measuring device (12) detects weeds (15).

3. A measuring device (12) according to at least one of the preceding claims **characterised in that** associated with the harvesting machine is a location determining device (21) which generates position signals (PS) in dependence on the location of the harvesting machine (1, 2), wherein the weed signal (US) is mapped together with the associated position signal (PS) in geo-referenced relationship in a memory unit (23).

4. A measuring device (12) according to one of the preceding claims, **characterised in that** the front-mounted implement (3) harvests the plant growth (5) in a working width (AB) from the filed, the sensor system (13) having a sensing width (AT) approximately corresponding to the working width (AB) of the front-mounted implement (3).

5. A measuring device (12) according to at least one of preceding claims 1 to 4, **characterised in that** the optical sensor system (13) operates in the visible wavelength with wavelengths of between 400 and 700 nm.

6. A measuring device (12) according to at least one of the preceding claims, **characterised in that** the harvesting machine is equipped with a track guide system (24) guiding the harvesting machine (1, 2) along a crop material edge (25) and/or a planned track.

## Revendications

1. Dispositif de mesure (12) sur une machine agricole de récolte (1, 2) destiné à analyser la couverture végétale (5) d'une portion de champ (17) la couverture végétale (5) se composant essentiellement d'un peuplement végétal à peu près dépourvu de chlorophylle et, pour autre part, d'un peuplement végétal contenant de la chlorophylle poussant à l'intérieur du peuplement végétal à peu près dépourvu de chlorophylle, **caractérise en ce que** le dispositif de mesure (12) détecte le peuplement végétal contenant de la chlorophylle lors tu trajet de récolte de la machine de récolte (1, 2)
et le peuplement végétal essentiellement dépourvu de chlorophylle est formé des plantes de culture (14) à récolter par la machine de récolte (1, 2), et le peuplement végétal contenant de la chlorophylle est formé de mauvaises herbes (15),
dans lequel plus le dispositif de mesure (12) comporte au moins un système de détection optique (13) avec lequel les teneurs en chlorophylle des plantes (4, 14, 15) sont détectables,
le dispositif de mesure (12) peu distinguer entre mauvaises herbes (15) et plantes de culture (14) à l'aide de teneurs en chlorophylle des plantes (4, 14, 15) et
la machine de récolte (1, 2) comporte un outil frontal (3), le système de détection (13) détectant la couverture végétale (5) en avant de l'outil frontal (3),
dans lequel le système de détection (13) balaye le peuplement végétal (5) obliquement d'en haut et en avance dans le sens de la marche (FR) de la machine récolte (1, 2).

2. Dispositif de mesure (12) selon revendication 1 **caractérise en ce que** le dispositif de mesure (12) comporte une unité d'évaluation (18) qui génère un signal de mauvaise herbe (US) lorsque le dispositif de mesure (12) détecte des mauvaises herbes (15).

3. Dispositif de mesure (12) selon au moins l'une des revendications précédentes, **caractérise en ce qu'**à la machine de récolte est associé un dispositif de localisation (21) qui génère des signaux de position (PS) en fonction de la position géographique de la machine de récolte (1, 2), le signal de mauvaise herbe (US) étant enregistré dans une unité de mémoire (23) de manière géoréférencée conjointement avec le signal de position associé (PS).

4. Dispositif de mesure (12) selon l'une des revendications précédentes, **caractérise en ce que** l'outil frontal (3) récolte la couverture végétale (5) sur une largeur de travail (AB) dans le champ, le système de détection (13) présentant une largeur de balayage (AT) qui correspond approximativement à la largeur (AB) de travail de l'outil frontal (3).

5. Dispositif de mesure (12) selon au moins l'une des revendications 1 à 4 précédentes, **caractérise en ce que** le système de détection optique (13) travaille dans la gamme de longueurs d'onde visibles avec de longueurs D'onde comprises entre 400 et 700 nm.

6. Dispositif de mesure (12) selon au moins l'une des revendications précédentes, **caractérise en ce que** la machine de récolte est équipée d'un système de guidage automatique (24) qui guide la machine de récolte (1, 2) le long d'un bord de produit de récolte (25) et/ou suivant une trajectoire planifiée.
